# EUROPÄISCHE PATENTSCHRIFT

(11) **EP 0 947 394 B1**
(45) Veröffentlichungstag und Bekanntmachung des Hinweises auf die Patenterteilung: **16.10.2002**
(21) Anmeldenummer: 99106108.6
(22) Anmeldetag: 01.04.1999
(51) Int. Cl.: B60R 21/16

(54) **Aufblasbares Schutzkissen zur Abdeckung der Seitenscheiben im Fahrzeug**
Inflatable restraining cushion
Coussin de sécurité gonflable de recouvrement des vitres latérales dans un véhicule

(30) Priorität: 03.04.1998 DE 29806200 U
(43) Veröffentlichungstag der Anmeldung: 06.10.1999
(73) Patentinhaber: TRW Occupant Restraint Systems GmbH & Co. KG, 73551 Alfdorf (DE)
(72) Erfinder: Fischer, Anton, 73579 Leinweiler (DE)
(74) Vertreter: Degwert, Hartmut, Dipl.-Phys.

(56) Entgegenhaltungen:
- DE-A- 4 337 656
- DE-A- 19 726 782
- DE-U- 29 716 573
- DE-U- 29 718 305
- GB-A- 2 297 950
- PATENT ABSTRACTS OF JAPAN vol. 096, no. 005, 31. Mai 1996 (1996-05-31) & JP 08 026063 A (NISSAN MOTOR CO LTD), 30. Januar 1996 (1996-01-30)

## Beschreibung

Die Erfindung betrifft ein aufblasbares Schutzkissen zur Abdeckung der Seitenscheiben eines Fahrzeugs bei einem Seitenaufprall oder Überschlag, mit einem vorderen Abspannpunkt im Bereich der A-Säule und einem hinteren Abspannpunkt im Bereich der C-Säule und mit einem unter der Dachkante des Fahrzeugs angeordneten Gasverteilungsrohr, das an einen Gasgenerator angeschlossen ist.

Ein solches Schutzkissen wird im gefalteten Zustand entlang der unteren Dachkante im Fahrzeug verstaut. Wegen des gekrümmten Verlaufes der Dachkante muß die untere Kante des Schutzkissens eine größere Länge als die gerade Verbindungslinie zwischen den beiden Abspannpunkten aufweisen. Im aktivierten Zustand des Schutzkissens erfolgt eine selbsttätige Verkürzung seiner unteren Kante durch die Ausdehnung des Schutzkissens quer zur Verbindungslinie der Abspannpunkte. Das Schutzkissen ist daher im aktivierten Zustand entlang seiner unteren Kante gespannt. Nachdem der Gasdruck im Inneren des Schutzkissens abgebaut ist, geht aber die Spannung entlang seiner unteren Kante verloren. Bei einem Überschlag des Fahrzeugs ist aber eine Schutzwirkung durch das Schutzkissen, indem dieses als Schutzvorhang wirkt, erwünscht. Diese Funktion kann das Schutzkissen nur unzureichend erfüllen, wenn es entlang seiner unteren Kante nicht verspannt ist.

Ein aufblasbares Schutzkissen gemäß dem Oberbegriff des Anspruchs 1 ist aus DE 297 16 573 U bekannt.

Durch die Erfindung wird ein Schutzkissen der eingangs angegebenen Art dahingehend weitergebildet, daß bei der Aktivierung des Schutzkissens eine Verspannung entlang seiner unteren Kante erfolgt, die auch nach dem Druckabbau im Schutzkissen erhalten bleibt. Dies wird erfindungsgemäß dadurch erreicht, daß das Gasverteilungsrohr an wenigstens einem seiner Enden einen eingesetzten Kolben mit einer aus dem Ende des Gasverteilungsrohres herausragenden Kolbenstange aufweist, an der einer der Abspannpunkte angeordnet ist.

Bei Aktivierung des Schutzkissens wird der Kolben und mit ihm die Kolbenstange am vorderen Ende des Gasverteilungsrohres herausgestoßen, wodurch der vordere Befestigungspunkt des Schutzkissens vorverlagert wird. Dadurch wird die effektive Länge der Linie zwischen den beiden Abspannpunkten vergrößert. Das Schutzkissen ist nunmehr entlang seiner unteren Kante zwischen den beiden Abspannpunkten verspannt, unabhängig von einer Verkürzung des Schutzkissens, die beim Aufblasen desselben eintritt. Die Verspannung des Schutzkissens bleibt auch nach seinem Erschlaffen vorhanden.

Bei der bevorzugten Ausführungsform, die durch die Raumgestaltung in modernen Fahrzeugen begünstigt wird, ist die Kolbenstange unter einem spitzen Winkel zu der durch die Abspannpunkte definierten Geraden geneigt. Eine gesonderte Rücklaufsperre für Kolben und Kolbenstange ist bei dieser Ausführungsform entbehrlich, weil die Kolbenstange durch den Zug entlang der unteren Kante des Schutzkissens im vorderen Ende des Gasverteilungsrohres verklemmt wird.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
Fig. 1 eine schematische Gesamtansicht eines aktivierten Schutzkissens in einem Fahrzeug; und
Fig. 2 eine vergrößerte Detailansicht des in Fig. 1 durch eine Umrahmung hervorgehobenen Bereichs.

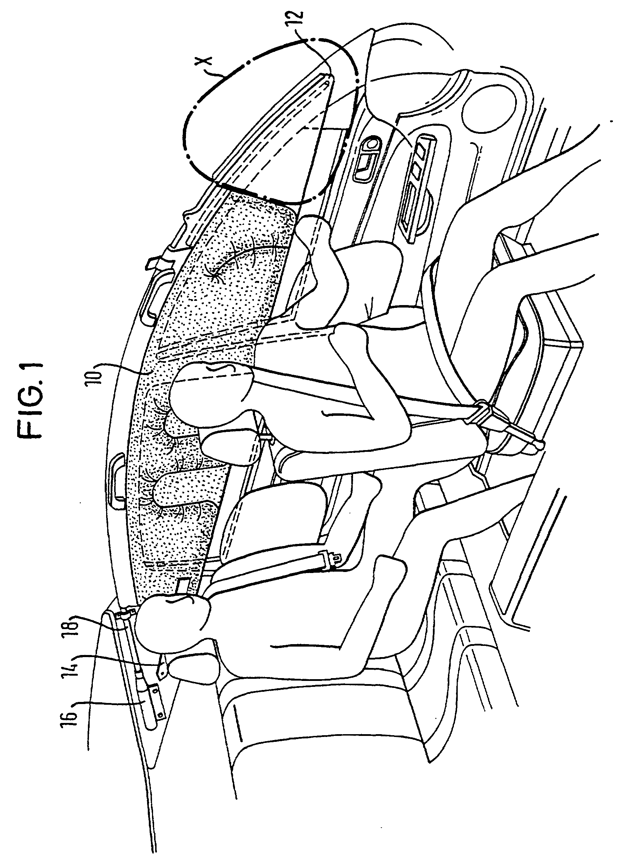

Das in der Zeichnung allgemein mit 10 bezeichnete Schutzkissen zur Abdeckung der Seitenscheibe eines Fahrzeugs bei einem Seitenaufprall oder Überschlag erstreckt sich zwischen einem vorderen Abspannpunkt 12 an der A-Säule bis zu einem hinteren Abspannpunkt 14 an der C-Säule des Fahrzeugs. An der C-Säule ist ferner ein Gasgenerator 16 angeordnet, von dem ein Gasverteilungsrohr 18 in das Innere des Schutzkissens 10 führt. Das Schutzkissen 10 bildet im aktivierten Zustand einen Vorhang, der die Seitenscheiben des Fahrzeugs und die mittlere B-Säule abdeckt. Wie aus Fig. 1 ersichtlich ist, ist nicht die gesamte Fläche des Schutzkissens aufblasbar; der vordere, an den Abspannpunkt 12 angrenzende Endabschnitt des Schutzkissens ist nicht aufblasbar.

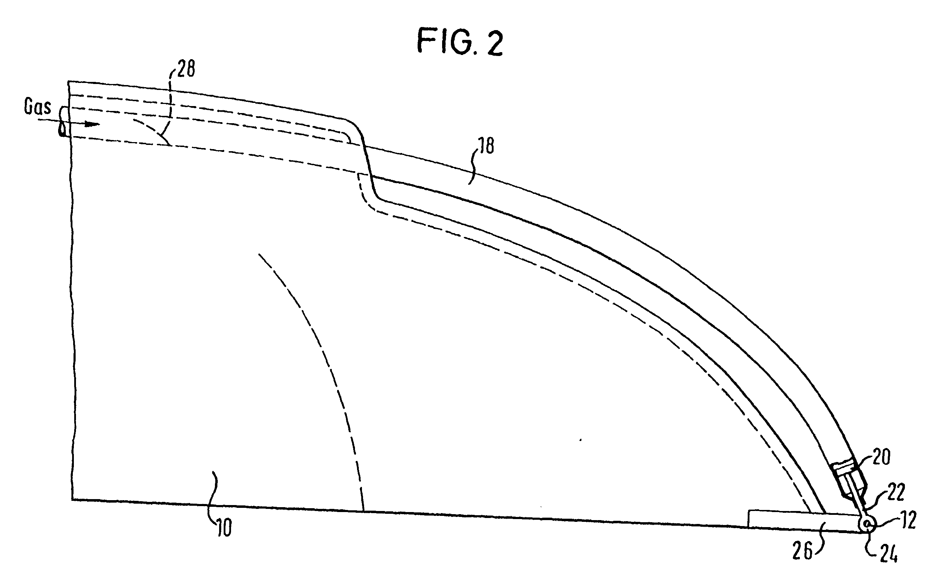

Wie aus Fig. 2 ersichtlich ist, tritt das Gasverteilungsrohr 18 am vorderen Ende des Schutzkissens 10 aus diesem aus und ist bis zu dem vorderen Abspannpunkt 12 verlängert. In das vordere Ende des Gasverteilungsrohres 18 ist ein verschiebbarer Kolben 20 eingesetzt. Eine mit dem Kolben 20 starr verbundene Kolbenstange 22 ragt aus dem Ende des Gasverteilungsrohres 18 heraus. Dieses Ende des Gasverteilungsrohres 18 ist nach innen umgebördelt und bildet so einen Anschlag für den Kolben 20. Am freien Ende der Kolbenstange 22 befindet sich eine Öse 24, an der ein mit dem vorderen Ende des Schutzkissens 10 vernähtes Spannband 26 angeschlossen ist. Der Strömungsquerschnitt des Gasverteilungsrohres 18 ist vor seinem Austritt aus dem Schutzkissen 10 durch eine Gasleitrampe 28 vermindert. Auch der Durchmesser des Gasverteilungsrohres 18 ist an seinem vorderen Ende vermindert. Bei der vorteilhaften Ausführungsform ist das Gasverteilungsrohr 18 an seinem vorderen Ende durch ein eingesetztes Rohrstück verminderten Durchmessers verlängert.

Zur Aktivierung des Schutzkissens wird der Gasgenerator 16 gezündet. Die von dem Gasgenerator 16 gelieferten Druckgase werden durch das Gasverteilungsrohr 18 in den aufblasbaren Teil des Schutzkissens 10 geleitet. Zugleich wird die innere Stirnfläche des Kolbens 20 mit Druck beaufschlagt, wodurch der Kolben mit der Kolbenstange 22 vorgetrieben wird, bis er an dem umgebördelten Rand am vorderen Ende des Gasverteilungsrohres 18 anschlägt. Mit der Kolbenstange 22 wird auch die Öse 24 nach vorne verlagert, wodurch der Abstand zwischen den Abspannpunkten 12, 14 vergrößert und die untere Kante des Schutzkissens 10 entsprechend gespannt wird. Da die Kolbenstange 22 einen spitzen Winkel mit der Abspannlinie zwischen den Abspannpunkten 12, 14 bildet, wird er durch die Zugspannung am vorderen Ende des Gasverteilungsrohres 18 verklemmt, so daß eine Rücklaufsperre für den Kolben 20 entbehrlich ist.

## Patentansprüche

1. Aufblasbares Schutzkissen (10) zur Abdeckung der Seitenscheiben eines Fahrzeugs bei einem Seitenaufprall oder Überschlag, mit einem vorderen Abspannpunkt (12) im Bereich der A-Säule und einem hinteren Abspannpunkt (14) im Bereich der C-Säule und mit einem unter der Dachkante des Fahrzeugs angeordneten Gasverteilungsrohr (18), das an einen Gasgenerator (16) angeschlossen ist, **dadurch gekennzeichnet, daß** das Gasverteilungsrohr (18) an wenigstens einem seiner Enden einen eingesetzten Kolben (20) mit einer aus dem Ende des Gasverteilungsrohres (18) herausragenden Kolbenstange (22) aufweist, an der einer (12) der Abspannpunkte angeordnet ist.

2. Schutzkissen nach Anspruch 1, **dadurch gekennzeichnet, daß** die Kolbenstange (22) unter einem spitzen Winkel zu einer durch die Abspannpunkte (12, 14) definierten Geraden geneigt ist.

3. Schutzkissen nach Anspruch 1 oder 2, **dadurch gekennzeichnet, daß** das Gasverteilungsrohr (18) am vorderen Ende des Schutzkissens (10) aus diesem herausragt und bis in den Bereich des vorderen Abspannpunktes (12) verlängert ist.

4. Schutzkissen nach einem der vorstehenden Ansprüche, **dadurch gekennzeichnet, daß** das Ende des Gasverteilungsrohres (18), aus dem die Kolbenstange (22) herausragt, zur Bildung eines Anschlags für den Kolben (20) einwärts umgebördelt ist.

5. Schutzkissen nach einem der vorstehenden Ansprüche, **dadurch gekennzeichnet, daß** am freien Ende der Kolbenstange (22) eine Öse (24) gebildet ist.

6. Schutzkissen nach einem der vorstehenden Ansprüche, **dadurch gekennzeichnet, daß** der Strömungsquerschnitt des Gasverteilungsrohres (18) vor dem Kolben (20) vermindert ist.

7. Schutzkissen nach einem der vorstehenden Ansprüche, **dadurch gekennzeichnet, daß** das Gasverteilungsrohr (18) an seinem den Kolben (20) aufnehmenden Ende durch ein eingesetztes Rohr verminderten Querschnitts verlängert ist.

## Claims

1. An inflatable protective cushion (10) to cover the side panes of a vehicle in the event of a side impact or when the vehicle overturns, with a frontal anchor point (12) in the area of the A-column and a rear anchor point (14) in the area of the C-column, and with a gas distribution tube (18) arranged under the roof edge of the vehicle and connected to a gas generator (16), **characterized in that** the gas distribution tube (18) is provided at at least one of its ends with an inserted piston (20) having a piston rod (22) protruding from the end of the gas distribution tube (18), at which rod one (12) of the anchor points is arranged.

2. The protective cushion according to Claim 1, **characterized in that** the piston rod (22) is inclined at an acute angle with respect to a straight line defined by the anchor points (12, 14).

3. The protective cushion according to Claim 1 or 2, **characterized in that** the gas distribution tube (18) projects from the protective cushion (10) at the front end thereof and extends as far as into the area of the frontal anchor point (12).

4. The protective cushion according to any one of the preceding claims, **characterized in that** the end of the gas distribution tube (18), from which the piston rod (22) projects, is flanged inwards to form a stop for the piston (20).

5. The protective cushion according to any one of the preceding claims, **characterized in that** an eyelet (24) is formed at the free end of the piston rod (22).

6. The protective cushion according to any one of the preceding claims, **characterized in that** the flow cross-section of the gas distribution tube (18) is reduced in front of the piston (20).

7. The protective cushion according to any one of the preceding claims, **characterized in that** the gas distribution tube (18) is extended, at its end which houses the piston (20), by means of an inserted tube of reduced cross-section.

## Revendications

1. Coussin de protection gonflable (10) pour recouvrir les vitres latérales d'un véhicule lors d'un impact latéral ou d'un capotage, comportant un point d'ancrage (12) antérieur dans la zone de la colonne A et un point d'ancrage postérieur (14) dans la zone de la colonne C et comportant un tube de distribution de gaz (18) agencé sous l'arête du toit du véhicule, lequel est raccordé à un générateur de gaz (16), **caractérisé en ce que** le tube de distribution de gaz (18) présente à au moins une de ses extrémités un piston (20) inséré avec une tige de piston (22) faisant saillie hors de l'extrémité du tube de distribution de gaz (18), sur laquelle est agencé l'un (12) des points d'ancrage.

2. Coussin de protection selon la revendication 1, **caractérisé en ce que** la tige de piston (22) est inclinée sous un angle aigu par rapport à une droite définie par les points d'ancrage (12, 14).

3. Coussin de protection selon la revendication 1 ou 2, **caractérisé en ce que** le tube de distribution de gaz (18) fait saillie hors du coussin de protection (10) à l'extrémité antérieure de celui-ci et est prolongé jusque dans la zone du point d'ancrage antérieur (12).

4. Coussin de protection selon l'une des revendications précédentes, **caractérisé en ce que** l'extrémité du tube de distribution de gaz (18) hors de laquelle la tige de piston (22) fait saillie, est rabattue vers l'intérieur pour former une butée pour le piston (20).

5. Coussin de protection selon l'une des revendications précédentes, **caractérisé en ce qu'**un oeillet (24) est formé à l'extrémité libre de la tige de piston (22).

6. Coussin de protection selon l'une des revendications précédentes, **caractérisé en ce que** la section transversale d'écoulement du tube de distribution de gaz (18) est réduite en amont du piston (20).

7. Coussin de protection selon l'une des revendications précédentes, **caractérisé en ce que** le tube de distribution de gaz (18) est prolongé à son extrémité recevant le piston (20) par un tube inséré de section réduite.
